# EUROPEAN PATENT APPLICATION

(11) **EP 4 793 108 A1**
(43) Date of publication of application: **19.08.2026**
(21) Application number: 25158274.8
(22) Date of filing: 17.02.2025
(51) Int. Cl.: B60R 21/207, B60R 21/231, B60R 21/2338

(54) **A SEAT-MOUNTED AIRBAG ASSEMBLY, AND A VEHICLE SEAT IN WHICH SUCH ASSEMBLY IS ARRANGED**

(71) Applicant: Autoliv Development AB, 447 83 Vårgårda (SE)
(72) Inventor: Hellot, Laurent, 76220 Gournay-en-Bray (FR); Jacqmarcq, Thierry, 76220 Gournay-en-Bray (FR); Lengaigne, Laurent, 76220 Gournay-en-Bray (FR); Ribillard, Damien, 76220 Gournay-en-Bray (FR); Gailhard, Carole, 76220 Gournay-en-Bray (FR); Halgrin, Julien, 76220 Gournay-en-Bray (FR); Marchand, Marc, 76220 Gournay-en-Bray (FR); Charpentier, Frederic, 76220 Gournay-en-Bray (FR)
(74) Representative: AWA Sweden AB

(57) **Abstract**

A seat-mounted airbag assembly (1000A; 1000B) is provided. The assembly comprises a lateral airbag (101A; 101B) supported by a lateral side of a vehicle seat (1) and a tensioning device (300) arranged at a seat pan (5) of the vehicle seat (1). The assembly also comprises a wrap-around restricting member (200A; 200B) that extends across the lateral airbag from an upper portion of a seat back (3) of the vehicle seat to the tensioning device. The wrap-around restricting member is configured to be tensioned by the tensioning device to thereby form a reaction surface to the lateral airbag upon inflation and deployment of the lateral airbag. The assembly further comprises a spring biased pre-tensioning bracket (400A; 400B) that is arranged to engage and maintain the wrap-around restricting member in a pretensioned condition during normal operation of the vehicle seat. The pre-tensioning bracket is configured to release its engagement with the wrap-around restricting member upon actuation of the tensioning device.

## Description

### Technical field

The present invention refers to a seat-mounted airbag assembly, and a vehicle seat in which such seat-mounted airbag assembly is arranged.

### Technical background

It is well known to use airbags in vehicles to protect seated passengers. The airbags are traditionally supported by the vehicle body's frame structure. It is also known to have airbags integrated in the seat structure. This allows the passenger to be protected no matter seat position. The seat integrated airbags may by way of example be arranged on one lateral side of the seat back, or on opposing lateral sides of the seat back. The lateral airbag is typically supplemented with a wrap-around belt that extends from an upper portion of a seatback, across the packed airbag and to a tensioning device that is arranged underneath the vehicle seat. The wrap-around belt has an overlength to allow free setting of the seat back angle at the user's choice during normal operation of the seat. In the event of an accident, the belt is configured to be tensioned by the belt tensioning device and form a reaction surface to the airbag as it is inflated and deployed. The reaction surface promotes the airbag to be deployed in a direction towards the seat and the seated person.

It has been shown to be advantageous to control the extension of the wrap-around belt during the normal operation of the vehicle seat to avoid that the belt entangles with other features in the vehicle seat and in the worst case get pinched. Both entanglement and pinching may have a negative impact on the functionality of the seat-mounted airbag assembly in the event of an accident where the assembly must be activated. Further, it has been shown to be advantageous to better control the belt extension to avoid any noise caused by the belt due to friction.

### Summary

It is an object of the present invention to provide a solution that provides control of the belt extension during normal operation of the vehicle seat.

The solution should strive to avoid that the belt entangles with other features in the vehicle seat and in the worst-case scenario gets pinched.

Another object is to provide a solution that controls the extension of the wrap-around belt along the lateral side of the vehicle seat during normal operation of the seat while still allowing a free setting of the vehicle seat.

Yet another object is to provide a solution where the overlength of the belt does not cause any noise.

These and other objects that will be apparent from the following summary and description are achieved by a seat-mounted airbag assembly of claim 1 comprising:
a lateral airbag supported by a lateral side of a vehicle seat;
a tensioning device arranged at a seat pan of the vehicle seat;
a wrap-around restricting member extending across the lateral airbag from an upper portion of a seat back of the vehicle seat to the tensioning device, wherein the wrap-around restricting member is configured to be tensioned by the tensioning device to thereby form a reaction surface to the lateral airbag upon inflation and deployment of the lateral airbag; and
a spring biased pre-tensioning bracket, said pre-tensioning bracket being arranged to engage and maintain the wrap-around restricting member in a pre-tensioned condition during normal operation of the vehicle seat; and
wherein the pre-tensioning bracket is configured to release its engagement with the wrap-around restricting member upon actuation of the tensioning device.

Accordingly, the invention provides a solution where the wrap-around restricting member interacts with a spring biased pre-tensioning bracket that engages and maintains the wrap-around restricting member in a pre-tensioned condition during normal operation of the vehicle seat. The normal operation of the vehicle seat includes setting the inclination of the seat back in view of the seat pan at the seated passenger's choice.

By maintaining the wrap-around restricting member in a pre-tensioned condition, the restricting member will always have a controlled extension along the lateral side of the vehicle seat. This reduces the risk of the restricting member being pinched or being entangled with other features in the vehicle seat. Also, the pre-tensioning reduces the risk of any noise being generated by the restricting member coming in un-controlled contact with the seat frame which as such contains metal.

The wrap-around restricting member has a longitudinal extension, and the wrap-around restricting member may along a first longitudinal portion be formed by a belt and along a second longitudinal portion be formed as a cord, and the pre-tensioning bracket may be configured to engage the second portion being formed as a cord. It is to be understood that the wrap-around restricting member may be divided in two or more portions, where the portions have different geometrical cross-sections.

The term *"belt"* should in the context of the invention be understood as a long, slender band having a rectangular or substantially rectangular cross section. The belt may by way of example have a homogenous, extruded cross section or be a woven structure.

The term *"cord"* should in the context of the invention be understood as a long, slender rope, string or even a chain. The cross section may by way of example be circular or substantially circular. The cord may have a homogenous cross section or be made up of several strands twisted or woven together.

By dividing the wrap-around restricting member along its longitudinal extension into two or more portions with different geometrical cross-sections, different technical effects may be provided for as seen along its longitudinal extension. The belt, which as such has a substantially rectangular cross section with two opposing, generally flat surfaces, may form a relatively wide and large reaction surface to the airbag upon inflation and deployment thereof. Further, the cord, which as such has a circular or substantially circular cross section will more easily conform to and accommodate different spatial orientations that may apply along the lateral side of the vehicle seat as seen along the seat back and the seat pan respectively, and not at least when connecting the restricting member to the tensioning device that typically is arranged underneath the vehicle seat.

The belt portion and the cord portion may by way of example be joined together by sewing, adhesive, welding or riveting, or a combination thereof.

The pre-tensioning bracket may be pivotably arranged to the vehicle seat around a pivot axis. The pivot axis is preferably arranged to extend in parallel with a rear seat pan cross member of the vehicle seat. The rear seat pan cross member is a structural part of a vehicle seat well known to the skilled person in the art, which cross member extends between two opposing lateral side members of the seat pan and pivotably connects the seat back to the seat pan.

The pre-tensioning bracket may comprise a groove and the wrap-around restricting member may be configured to be received in said groove by means of a snap-fit.

The groove may be provided with an under-cut cross sectional profile. The under-cut cross-sectional profile may be provided with a recess and a mouth, where the mouth has a width that is slightly smaller than a width of the recess, and where the width of the mouth is slightly smaller than the width of the wrap-around restricting member. The restriction member can thereby be received and maintained in the groove, but be pulled out upon tensioning the restriction member by the tensioning device. The restriction member will be forced to pop-out from the groove when tensioned by the tensioning device to a degree where the pivoting force that is indirectly applied by the tensioning device to the pre-tensioning bracket exceeds the inherent pre-tensioning force of the pre-tensioning bracket.

In the event the wrap-around restriction member is formed partly by a cord, it is preferably the portion being formed as a cord that is received in the groove.

The mouth of the groove is preferably arranged to be oriented upwardly towards a top surface of the seat pan.

The groove may be eccentrically arranged in view of the pivot axis of the pre-tensioning bracket. Thereby a lever is formed that contributes to and strengthens the pre-tensioning of the restricting member.

The groove may have a straight-linear extension on the pre-tensioning bracket.

A straight-linear extension has shown to be efficient when releasing the engagement between the groove and the wrap-around restricting member. The skilled person realizes that the straight-linear extension must not be fully straight-linear but can be replaced by a portion having a substantially larger radius than the rear seat pan cross member of the vehicle seat.

The pivot axis of the pre-tensioning bracket may coincide with a rear seat pan cross member pivotably connecting the seat back with the seat pan. A pivoting of the seat back will thereby automatically result in a tensioning/release of the pre-tensioning bracket.

The pre-tensioning bracket may be spring biased by a torsion spring. A torsion spring is as such well known to the skilled person. It is a mechanical spring that works by exerting a torque or a twisting force when it is twisted along its axis. The spring is made of wire that is wound in a spiral shape, with the ends of the wire attached to a stationary point on one end and a rotating point on the other end.

The torsion spring may comprise one leg that is attached to the pre-tensioning bracket, and one leg that is attached to a trimming of the vehicle seat extending along a lateral side of the seat pan. It is to be understood that the trimming may be replaced by any other stationary part of the vehicle seat.

The pre-tensioning bracket may be configured to maintain the wrap-around restricting member in a substantially non-slacked condition during normal operation of the vehicle seat. A non-slacked condition should be understood as a condition where non-supported portions of the restricting member are prevented from shaking/swinging during normal operation of the vehicle seat.

The pre-tensioning bracket may be biased around its pivot axis in a direction towards the seat back.

The actuation of the tensioning device may be configured to be coordinated with an inflation of the lateral airbag. Accordingly, in the event an accident should be detected by one or more sensors of the vehicle and where the ECU (Electrical Control Unit) of the vehicle determines that the accident could be mitigated by the associated lateral airbag, the airbag is inflated while also the tensioning device is activated to tension the wrap-around restriction member to thereby form a reaction surface to the airbag as it is inflated and deployed.

According to another aspect, the invention refers to a vehicle seat, wherein a first seat-mounted airbag assembly according to any of claims 1-11 is arranged on a first lateral side of the vehicle seat, and a second seat-mounted airbag assembly according to any of claims 1-11 is arranged on a second lateral side of the vehicle seat.

The first and the second seat-mounted airbag assemblies may have the same design and functionality. The features and advantages discussed above in view of the first seat-mounted airbag assembly are equally and directly applicable to the second seat-mounted airbag assembly. Hence, for the sake of efficiency and to avoid undue repetition, reference is made to the sections above.

The first and the second seat-mounted airbag assemblies are preferably arranged on opposite lateral sides of the vehicle seat to thereby provide a protection to the seated passenger from two opposite sides, one from the near side (closest to the door) and one from the far side (towards the longitudinal centreline of the vehicle). At least one of the two lateral airbags may be designed to deploy to form a frontal protection to thereby protect the chest portion and also provide a facial protection. The first and the second lateral airbags may be symmetric.

The wrap-around restricting member of the first seat-mounted airbag assembly and the wrap-around restricting member of the second seat-mounted airbag assembly may connect to a common tensioning device. The tensioning device may comprise an actuator and a pulling arrangement. The actuator may be a pyrotechnically operated piston which in one end is connected to the pulling arrangement. The common tensioning device may be arranged centrally on the lower side of the seat pan or underneath the vehicle seat. By being centrally arranged, the tensioning of the first and second wrap-around restricting members will be substantially uniform.

A further scope of applicability of the present invention will become apparent from the detailed description given below. However, the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular parts of the device described or steps of the methods described as such device and method may vary. It is also to be understood that the terminology used herein is for purpose of describing particular embodiments only and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a vehicle seat with two seat-mounted airbag assemblies, each comprising a lateral airbag arranged in the seat back.
Fig. 2 is a schematic front view of one embodiment of a vehicle seat with two seat-mounted airbag assemblies where the two airbags have been deployed.
Fig. 3 is a schematic side view of a vehicle seat with a seat-mounted airbag assembly where the airbag has been deployed.
Fig. 4A is a schematic overview of two seat-mounted airbag assemblies together with a seat pan and trimmings.
Fig. 4B is a schematic view of the pre-tensioning bracket.
Fig. 5A discloses highly schematically the condition of the seat mounted airbag assembly during normal operation of the vehicle seat.
Fig. 5B discloses highly schematically the engagement between the wrap-around restricting member and the spring biased pre-tensioning bracket during normal operation of the vehicle seat.
Fig. 5C discloses highly schematically the engagement between the wrap-around restricting member and the spring biased pre-tensioning bracket during actuation of the tensioning device.
Fig. 5D discloses highly schematically the seat mounted airbag assembly when the wrap-around restricting member has released its engagement with the spring biased pre-tensioning bracket as a result of the actuation of the tensioning device.
Fig. 5E discloses highly schematically a condition when the engagement between the wrap-around restricting member and the spring biased pre-tensioning is fully released.
Fig. 6 discloses highly schematically an embodiment of a seat mounted airbag assembly where the wrap-around restricting member along its length is divided into two portions with different cross sections.
Fig. 7 discloses highly schematically an embodiment of a joint between two joined belt portions.

### Detailed description

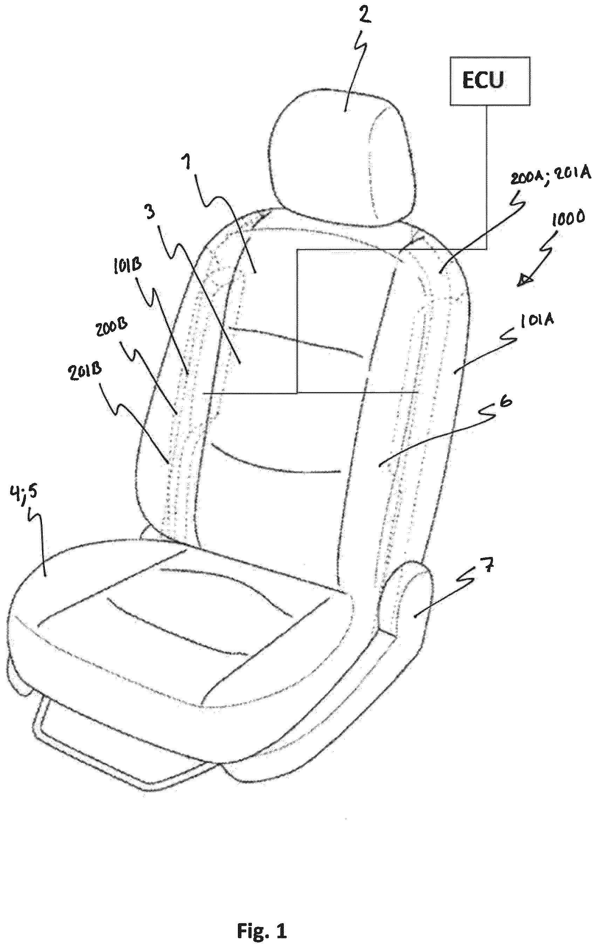

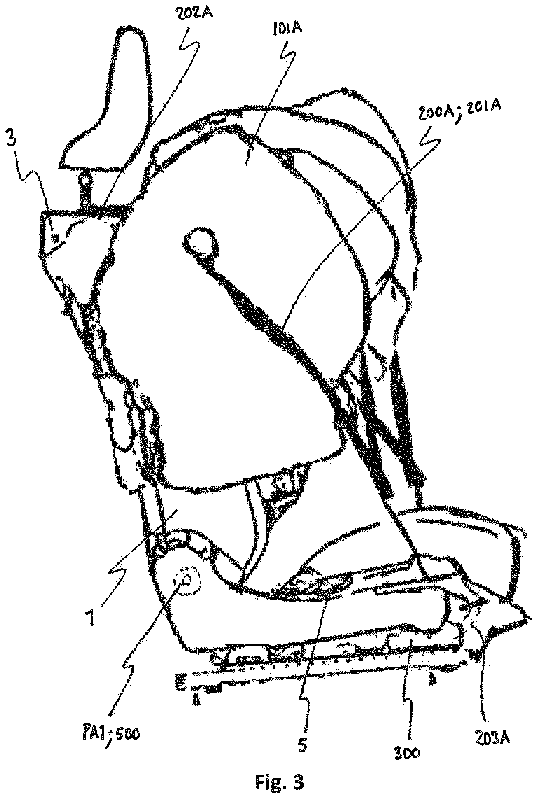

Starting with Fig. 1, one embodiment of a vehicle seat 1 with two seat-mounted airbag assemblies 1000 with a first and a second lateral airbag 101A; 101B is schematically disclosed. The vehicle seat 1 comprises a head rest 2, a seat back 3 and a seat cushion 4 supported by a seat pan 5. A trimming 7 extends along the opposing lateral sides of the seat pan 5. The seat pan 5 is arranged inside the vehicle seat 1 below the seat cushion 4 and is hence not visible in Fig. 1 but can be seen in Fig. 3. Each lateral side of the seat back 3 comprises an airbag 101A; 101B. A wrap-around restricting member 200A, 200B extends along an outer surface of each lateral airbag 101A; 101B. As will be described below, the wrap-around restricting member 200A, 200B comprises at least one longitudinal member 201A; 201B that extends from an upper end of the seat back 3, along the outer lateral side of the seat back 3, along the seat pan 5 and down to a tensioning device 300 that is arranged underneath the vehicle seat 1. The tensioning device 300 is hidden underneath the vehicle seat 1 but can be seen in Fig. 3.

The airbags 101A; 101B and wrap-around restricting members 200A, 200B are arranged inside an upholstery 6. The upholstery 6 is configured to rupture as the airbags 101A; 101B are inflated and deployed.

Each airbag 101A; 101B is connected to an inflator (not illustrated) which is turn is connected to an Electrical Control Unit (ECU). This is all well known to the skilled person and not further discussed.

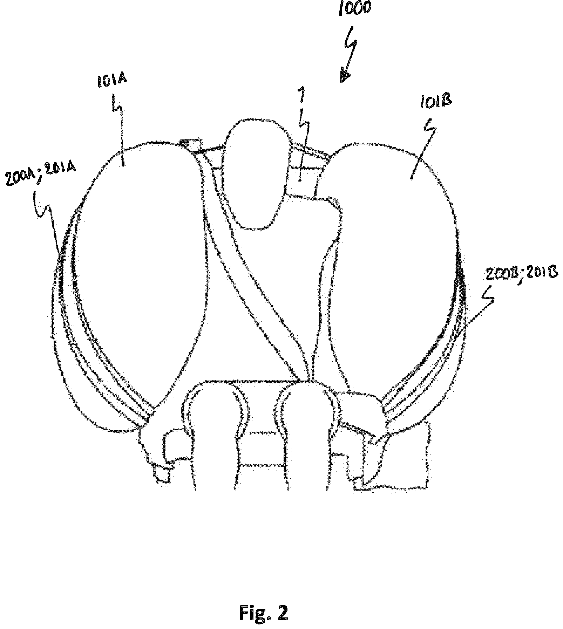

Turning to Fig. 2, the seat-mounted airbag assemblies 1000 are disclosed in a condition where the two lateral airbags 101A; 101B have been inflated and fully deployed. The two airbags 101A; 101B are disclosed as being mirrored, i.e., having the same design on both sides of the vehicle seat 1. The skilled person realizes that the airbags 101A; 101B may be designed in a number of different ways depending on which parts of the body of the seated passenger they are intended to protect. As a non-limiting example, the airbags 101A; 101B may be designed to provide not only a sidewards protection, but also a frontal protection. Also, it is to be understood that the two airbags 101A; 101B may have different designs. It is further to be understood that one of the airbags 101A; 101B may be omitted. The seat-mounted airbag assembly 1000 may accordingly comprise one lateral airbag 101A; 101B only.

The first lateral airbag 101A is associated with a first wrap-around restricting member 200A and the second lateral airbag 101B is associated with a second wrap-around restricting member 200B. The at least one longitudinal member 201A, 201B of each wrap-around restricting member 200A, 200B is configured to be tensioned and form a reaction surface to its associated airbag 101A; 101B when the airbag 101A; 101B is inflated and deployed.

As can be seen in Fig. 2, each wrap-around restricting member 200A, 200B may comprise more than one longitudinal member 201A, 201B. Fig. 2 discloses an embodiment where each wrap-around restricting member 200A, 200B comprises two longitudinal members 201A, 201B that run side by side. The wrap-around restricting members 200A, 200B connect to one and the same tensioning device (omitted in Fig. 2). It is to be understood that each wrap-around restricting member 200A, 200B may connect to its own tensioning device.

Now turning to Fig. 3, a side view of a vehicle seat 1 is disclosed. The vehicle seat 1 is disclosed in a condition where the lateral airbag 101A has been inflated and fully deployed. Due to the side view, only one airbag 101A and one wrap-around belt restricting member 200A is shown. A corresponding arrangement may be arranged on the opposite lateral side of the vehicle seat 1. The arrangement on the opposite side may have the same design and functionality, whereby only one of the two is discussed below.

The trimming 7 on the vehicle seat 1 (see Fig. 1) has been removed to better illustrate the seat pan 5 and the tensioning device 300.

The seat back 3 connects to the seat pan 5 via a rear seat pan cross member 500 that extends between two opposing lateral side members of the seat pan 5 and pivotably connects the seat back 3 to the seat pan 5.

The wrap-around belt restricting member 200A comprises a longitudinal member 201A having an upper end 202A that is fixedly connected to a top portion of the seat back 3, and a lower end 203A that is fixedly connected to the tensioning device 300 that is arranged underneath the vehicle seat 1. As given above, the wrap-around belt restricting member 200A may comprise more than one longitudinal member. Fig. 3 discloses two longitudinal members that connect to the tensioning device 300, but only one of them is described. It is to be stressed that the wrap-around belt restricting member may comprise one longitudinal member only or more than two longitudinal members.

The longitudinal member 201A extends along an exterior side of the inflated airbag 101A. The longitudinal member 201A is disclosed as having a substantially flat cross section along its interface with the airbag 101A. The longitudinal member 201A forms a reaction surface to the associated airbag 101A during inflation and deployment of the airbag 101A. The longitudinal member 201A may be seen as an external tether that forces the airbag 101A to conform to the body of the seated passenger.

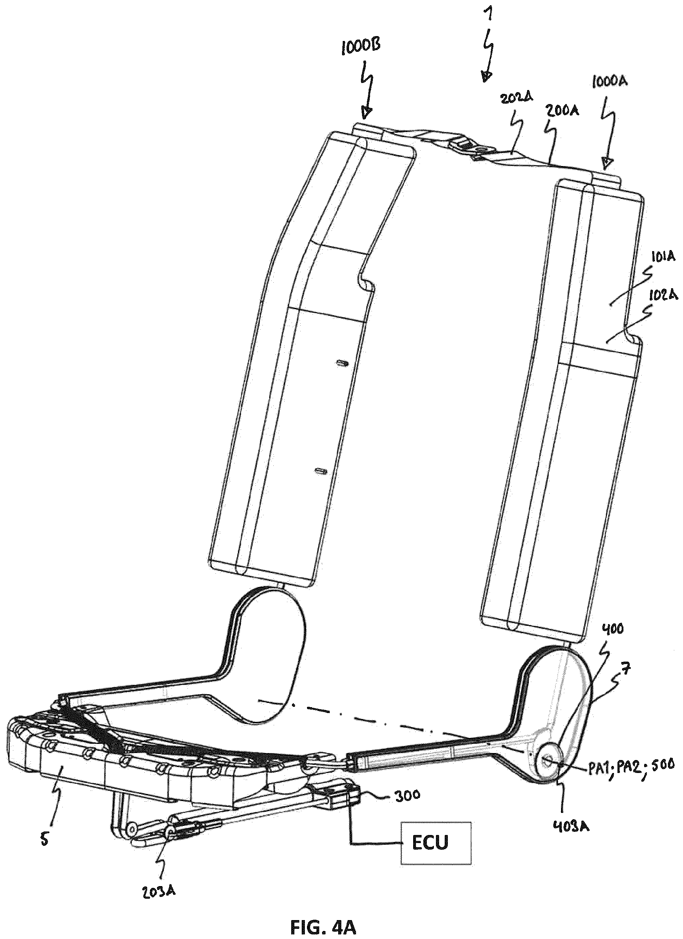

Now turning to Fig. 4A, the design of the seat-mounted airbag assembly 1000A of the invention is disclosed as mounted to a vehicle seat 1. One assembly 1000A, 1000B is disclosed to extend along each lateral side of the vehicle seat 1. Typical features of the vehicle seat 1, all of them well known to the skilled person, such as the seat back, upholstery, cushioning and the spring structure have been removed to facilitate the understanding. Also, the rear seat pan cross member 500 that pivotably connects the seat back with the seat pan (see Fig. 3) is omitted although its pivot axis PA1 is illustrated. Since the seat-mounted airbag assemblies 1000A, 1000B on the two lateral sides of the vehicle seat 1 are identical, only one assembly 1000A will be discussed in the following unless nothing else is explicitly given.

The seat-mounted airbag assembly 1000A is disclosed as comprising a lateral airbag 101A that is supported by a lateral side of the vehicle seat 1. The airbag 101A is disclosed as being contained in a casing 102A. The casing 102A comprises non-disclosed rupture lines to allow the airbag 101A to be deployed upon inflation. The airbag 101A may be stored in the casing 102A in a rolled and/or folded condition. The casing can be omitted.

The tensioning device 300 is arranged at the seat pan 5 of the vehicle seat. The tensioning device 300 is disclosed as being arranged underneath the vehicle seat 1 and may be supported either by the seat pan 5 or by the floor of the vehicle.

A wrap-around restricting member 200A in the form of a longitudinal member 201A extends along the lateral airbag 101A and has an upper portion 202A that connects to the seat back of the vehicle seat 1 and a lower portion 203A that connects to the tensioning device 300. The wrap-around restricting member 200A is, as is discussed above with reference to Figs. 1-3, configured to be tensioned by the tensioning device 300 to thereby form a reaction surface to the lateral airbag 101A upon inflation and deployment of the airbag. The wrap-around restricting member 200A extends along an exterior side of the airbag 101A inside the casing 102A.

The assembly 1000A differs from prior art at least in that a spring biased pre-tensioning bracket 400A is arranged at the interface between the rear end of the seat pan 5 and the lower end of the seat back. The pre-tensioning bracket 400A is pivotably arranged to the vehicle seat 1 around a pivot axis PA2. The pivot axis PA2 of the pre-tensioning bracket 400 is disclosed to coincide with the pivot axis PA1 of the rear seat pan cross member 500 (only its pivot axis is disclosed) that pivotably connects the seat back with the seat pan 5. The skilled person realizes that other positions along the lateral side of the vehicle seat are possible. No matter position, it is preferred that the pivot axis PA2 of the pre-tensioning bracket 400A is arranged to extend in parallel with the rear seat pan cross member 500 of the vehicle seat 1.

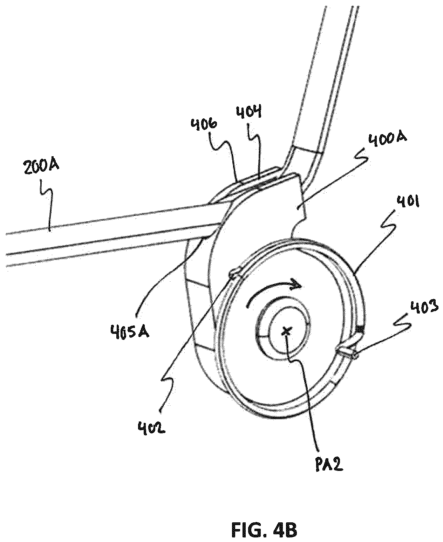

The pre-tensioning bracket 400A, best seen in Fig. 4B, is spring biased by a torsion spring 401. The torsion spring 401 is disclosed as comprising one leg 402 that is attached to the pre-tensioning bracket 400 and one end 403 that is attached to the trimming 7, see Fig. 4A. Since the pre-tensioning bracket 400A in turn is attached to the rear seat pan cross member 500 of the vehicle seat, a pivoting of the seat back will thereby automatically result in a tensioning/release of the pre-tensioning bracket 400A.

The pre-tensioning bracket 400A is biased around its pivot axis PA2 in a direction towards the seat back, see arrow in Fig. 4B.

The pre-tensioning bracket 400A comprises a groove 404 that extends along a peripheral edge portion of the bracket. A portion of the wrap-around restricting member 200A is received in said groove 404 by means of a snap-fit. The snap-fit is provided for by the groove 404 being provided with an under-cut cross sectional profile. The cross-sectional profile is provided with a recess 405 and a mouth 406, where the mouth has a width that is slightly smaller than a width of the recess, and where the width of the mouth is slightly smaller than the width of the wrap-around restricting member. The wrap-around restriction member 200A can thereby be received and maintained in the groove 404, but be pulled out upon tensioning of the wrap-around restriction member 200A by the tensioning device 300. In the event the wrap-around restriction member 200A is formed partly by a cord, it is preferably the portion being formed as a cord that is received in the groove.

The pre-tensioning bracket 400A is mounted to the vehicle seat 1 so that the mouth of the groove 404 is oriented upwardly towards a top surface of the seat pan.

The groove 404 is eccentrically arranged in view of the pivot axis PA2 of the pre-tensioning bracket 400A.

The groove 404 is disclosed as having a straight-linear extension on the pre-tensioning bracket 400A. The skilled person realizes that the straight-linear extension must not be fully straight-linear but can be replaced by a portion having a substantially larger radius than the rear seat pan cross member 500.

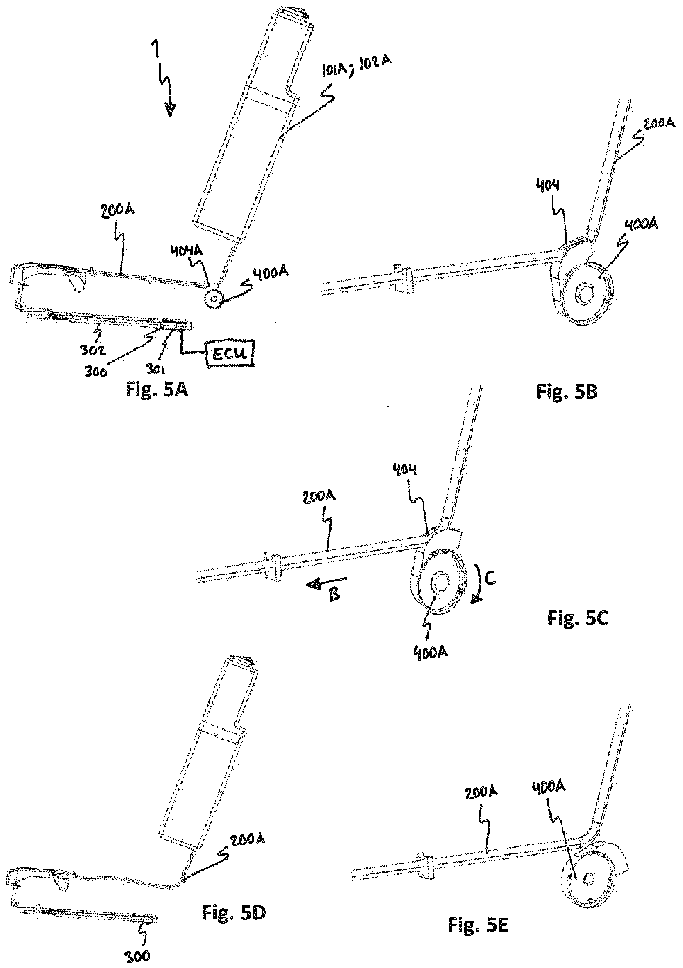

In the following, the operation of the seat-mounted airbag assembly 1000A will be discussed with reference to Figs. 5A-5E. Since the seat-mounted airbag assemblies 1000A, 1000B on the two lateral sides of the vehicle seat 1 are identical, only one assembly 1000A will be discussed in the following.

Starting with Fig. 5A and Fig. 5B, the normal operation of the vehicle seat 1 is disclosed. The pre-tensioning bracket 400A engages and maintains the wrap-around restricting member 200A in a pre-tensioned condition. As mentioned above, the wrap-around restricting member 200A extends from an upper end of the seat back, along an exterior side of the lateral airbag 101A that is disclosed as being contained in a casing 102A. The restricting member 200A extends inside the casing 102A and is thereby not illustrated along its full extension. A portion of the restricting member 200A engages the groove 404 of the pre-tensioning bracket 400A and continues along a lateral side of the seat pan 3 where it engages the tensioning device 300 that is arranged underneath the vehicle seat 1. Accordingly, the wrap-around restricting member 200A interacts with the spring biased pre-tensioning bracket 400A which engages and maintains the wrap-around restricting member 200A in a pre-tensioned condition during normal operation of the vehicle seat 1. The pre-tensioning bracket 400A maintains the wrap-around restricting member 400A in a substantially non-slacked condition during normal operation of the vehicle seat. The normal operation of the vehicle seat includes setting the inclination of the seat back in view of the seat pan at the seated passenger's choice. By maintaining the wrap-around restricting member in a pre-tensioned condition, the restricting member will always have a controlled extension along the lateral side of the vehicle seat. This reduces the risk of the restricting member being pinched or being entangled with other features in the vehicle seat. Also, the pre-tensioning reduces the risk of any noise being generated by the restricting member coming on contact with the seat frame which as such contains metal.

The tensioning device 300 comprises an actuator 301 and a pulling arrangement 302. The actuator 301 may be a pyrotechnically operated piston (arranged inside the actuator) which in one end is connected to the pulling arrangement 302. The pulling arrangement 302 is in turn connected to the lower end of the wrap-around restricting member 200A.

The tensioning device 300 is operatively connected to the ECU and is configured to be activated upon a detected accident that is determined to be able to be mitigated by the seat-mounted airbag assembly 1000.

Now turning to Figs. 5C. The tensioning device 300 has been activated and is pulling the wrap-around restricting member 200A, see arrow B. The tensioning of the wrap-around restricting member 200A causes the same to release its engagement with the groove 404 that extends along an upper peripheral edge portion of the pre-tensioning bracket 400A. Since the pre-tensioning bracket 400A is biased towards the seat back, see arrow C, the releasing of the engagement between the wrap-around restricting member 200A and the pre-tensioning bracket 400A will be assisted and the wrap-around restricting member 200A will pop out from the groove 404. The wrap-around restriction member 200A will be forced to pop-out from the groove 404 when tensioned by the tensioning device 300 to a degree where the pivoting force that is applied by the tensioning device to the pre-tensioning bracket 400A exceeds the pre-tensioning force of the pre-tensioning bracket provided by the torsion spring 401.

Now to Figs. 5E and 5F. The engagement between the wrap-around restricting member 200A and the pre-tensioning bracket 400A is now fully released and the wrap-around restricting member 200A is disclosed as being provided with a slack, see Fig. 5D. The slack is temporary. The actuation of the tensioning device 300 is configured to be coordinated with an inflation of the lateral airbag. Accordingly, in the event an accident should be detected by one or more sensors of the vehicle and where the ECU (Electrical Control Unit) of the vehicle determines that the accident could be mitigated by the lateral airbag, the airbag is inflated while also the tensioning device 300 is activated to tension the wrap-around restriction member 200A to thereby form a reaction surface to the airbag as it is inflated and deployed. This means that the slack of the wrap-around restricting member 200A will be removed as the airbag is inflated and deployed. The inflation and deployment of the airbag is not illustrated in Figs. 5D-5E, however, turning to Figs. 2 and 3, the full assembly is disclosed with two inflated and fully deployed lateral airbags and where the airbags act against the wrap-around restricting members which act as reaction surfaces for the airbags.

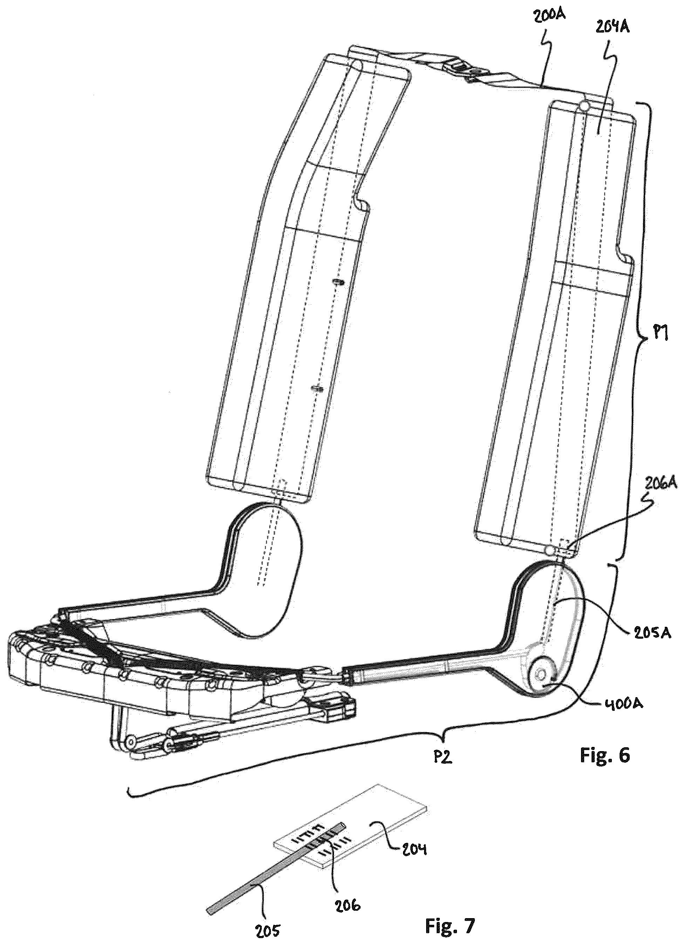

Now turning to Fig. 6. The wrap-around restricting member 200A, 200B has previously been described as a longitudinal member 201A, 201B. The wrap-around restricting member 200A and its longitudinal ember 201A, is in Fig. 6 disclosed as being formed by a belt 204A along a first portion P1, and as a cord 205A along a second portion P2. The pre-tensioning bracket 400A may engage the second portion P2 being formed as a cord 205A. By dividing the wrap-around restricting member 200A along its longitudinal extension into at least two portions with different geometrical cross-sections, different technical effects may be provided for as seen along its longitudinal extension. The belt 204A, which as such has a substantially rectangular cross section with two opposing, generally flat surfaces, may form a relatively wide and large reaction surface to the airbag upon inflation and deployment thereof. Further, the cord 205A, which as such has a circular or substantially circular cross section will easily conform to and accommodate different spatial orientations that may apply along the lateral side of the vehicle seat as seen along the seat back and the seat pan and not at least when connecting the wrap-around restricting member 200A to the tensioning device 300 that typically is arranged centrally underneath the vehicle seat. The belt 204 and the cord 205 may be joined together by way of example by sewing, adhesive, welding or riveting, or a combination thereof. Fig. 7 discloses one, non-limiting example of such joint 206 between a belt 204 and a cord 205.

The joint 206 is preferably arranged along a portion of the wrap-around restricting member 200A that extends from a lower end of the lateral airbag 101A to a position adjacent, but still displaced in view of, the pre-tensioning bracket 400A. The joint 206 should be positioned along the longitudinal extension of the wrap-around restricting member 200 so that there is no risk of the joint 206 coming into contact with the pre-tensioning bracket 400 during operation of the vehicle seat.

## Claims

1. A seat-mounted airbag assembly (1000A; 1000B) comprising:
a lateral airbag (101A; 101B) supported by a lateral side of a vehicle seat (1);
a tensioning device (300) arranged at a seat pan (5) of the vehicle seat (1);
a wrap-around restricting member (200A; 200B) extending across the lateral airbag from an upper portion of a seat back (3) of the vehicle seat to the tensioning device (300), wherein the wrap-around restricting member (200A; 200B) is configured to be tensioned by the tensioning device (300) to thereby form a reaction surface to the lateral airbag (101A, 101B) upon inflation and deployment of the lateral airbag; and
a spring biased pre-tensioning bracket (400A; 400B), said pre-tensioning bracket being arranged to engage and maintain the wrap-around restricting member (200A; 200B) in a pre-tensioned condition during normal operation of the vehicle seat (1); and
wherein the pre-tensioning bracket (400A; 400B) is configured to release its engagement with the wrap-around restricting member (200A; 200B) upon actuation of the tensioning device (300).

2. The seat-mounted airbag assembly according to claim 1, wherein the pre-tensioning bracket (400A; 400B) is pivotably arranged to the vehicle seat (1) around a pivot axis (PA2).

3. The seat-mounted airbag assembly according to claim 1 or 2, wherein the pre-tensioning bracket (400A; 400B) comprises a groove (404) and wherein the wrap-around restricting member (200A; 200B) is configured to be received in said groove by means of a snap-fit.

4. The seat-mounted airbag assembly according to claim 3, wherein the groove (404) is eccentrically arranged in view of the pivot axis (PA2) of the pre-tensioning bracket (400A; 400B).

5. The seat-mounted airbag assembly according to claim 3 or 4, wherein the groove (404) has a straight-linear extension on the pre-tensioning bracket (400A; 400B).

6. The seat-mounted airbag assembly according to any of claims 2-5, wherein the pivot axis (PA2) of the pre-tensioning bracket (400A, 400B) coincides with a rear seat pan cross member (500) pivotably connecting the seat back (3) with the seat pan (5).

7. The seat-mounted airbag assembly according to any of the preceding claims, wherein the pre-tensioning bracket (400A; 400B) is spring biased by a torsion spring (401).

8. The seat-mounted airbag assembly according to claim 7, wherein the torsion spring (401) comprises one leg (402) that is attached to the pre-tensioning bracket (400A; 400B) and one leg (403) that is attached to a trimming (7) of the vehicle seat (1) extending along a lateral side of the seat pan (5).

9. The seat-mounted airbag assembly according to any of the preceding claims, wherein the pre-tensioning bracket is configured to maintain the wrap-around restricting member in a substantially non-slacked condition during normal operation of the vehicle seat.

10. The seat-mounted airbag assembly according to any of claims 2-8, wherein the pre-tensioning bracket (400A, 400B) is biased around its pivot axis (PA2) in a direction towards the seat back (3).

11. The seat-mounted airbag assembly according to any of the preceding claims, wherein the actuation of the tensioning device (300) is configured to be coordinated with an inflation of the lateral airbag (101A; 101B).

12. A vehicle seat, wherein a first seat-mounted airbag assembly (1000A) according to any of claims 1-11 is arranged on a first lateral side of the vehicle seat (1), and a second seat-mounted airbag assembly (1000B) according to any of claims 1-11 is arranged on a second lateral side of the vehicle seat (1).

13. The vehicle seat according to claim 12, wherein the wrap-around restricting member (200A) of the first seat-mounted airbag assembly (1000A) and the wrap-around restricting member (200B) of the second seat-mounted airbag assembly (1000B) connect to a common tensioning device (300).
